# EUROPEAN PATENT SPECIFICATION

(11) **EP 1 351 450 B1**
(45) Date of publication and mention of the grant of the patent: **30.05.2007**
(21) Application number: 03005845.7
(22) Date of filing: 14.03.2003
(51) Int. Cl.: H04L 12/46

(54) **Fastpath implementation for transparent local area network (LAN) services over multiprotocol label switching (MPLS)**
Schellpfadimplementierung für transparente LAN-Dienste über MPLS
Implementation de voie rapide pour des services LAN transparents sur MPLS

(30) Priority: 15.03.2002 US 364147 P; 11.10.2002 US 417644 P; 04.03.2003 US 377644
(43) Date of publication of application: 08.10.2003
(73) Proprietor: Broadcom Corporation, Irvine, CA 92617 (US)
(72) Inventor: Shankar, Laxman, 95117 San Jose, California (US); Ambe, Shekhar, 95117 San Jose, California (US)
(74) Representative: Jehle, Volker Armin

(56) References cited:
- EP-A- 1 045 553
- WO-A-01/99354
- WO-A-02/18965
- US-A1- 2002 024 964
- METZ C: "LAYER 2 OVER IP/MPLS" IEEE INTERNET COMPUTING, IEEE SERVICE CENTER, PISCATAWAY, NJ, US, July 2001 (2001-07), pages 77-82, XP001060238 ISSN: 1089-7801
- BRITTAIN P ET AL: "MPLS VIRTUAL PRIVATE NETWORKS" IEEE COMMUNICATIONS, November 2000 (2000-11), XP002217621
- ARMITAGE G: "MPLS: THE MAGIC BEHIND THE MYTHS" IEEE COMMUNICATIONS MAGAZINE, IEEE SERVICE CENTER. PISCATAWAY, N.J, US, vol. 38, no. 1, January 2000 (2000-01), pages 124-131, XP000908346 ISSN: 0163-6804

## Description

### REFERENCE TO RELATED APPLICATION:

This application claims priority of United States Provisional Patent Application Serial No. 60/364,147, which was filed on March 15, 2002.

### BACKGROUND OF THE INVENTION:

### Field of the Invention:

This invention relates to a network device for providing multipoint services and a method of transmitting a packet in a network.

### Description of the Related Art:

Traditionally, a Virtual Private Network (VPN) has been defined as a private network for voice and data built with carrier services. Most traditional carrier-based VPNs are frame relay and Asynchronous Transfer Mode (ATM) networks. In these types of conventional VPNs, packet-, frame-, and cell-switching networks carry information in discrete bundles, commonly referred to as "packets" that are routed through a mesh network of switches to a destination. A transmission path for the packets is routed through the switches and relays of the switching network. Many users share the network. To route a packet through the transmission path, carriers of the VPNs may program virtual circuits into the network that simulate dedicated connections between a company's sites. A web of these virtual circuits forms a virtual private network over the carrier's packet-switched network. While these traditional carrier-based VPNs can provide service guarantees using the virtual circuits, setting up and implementing Internet VPNs has become a simpler and more cost-effective method to provide VPN services to subscribers.

Thus, recently, the development of Internet VPNs has become a growing trend. Accordingly, the term "VPN" has come to describe private, encrypted tunnels through the Internet for transporting both voice and data between an organization's different sites.

Unlike conventional carrier-based VPNs, which have been used to traditionally connect a company's different sites, Internet VPNs can include everyone in the company, including mobile users and home workers. Users anywhere may simply dial into a local Internet service provider (ISP), rather than in to the corporate network, using 800 numbers, modem pools, and remote access servers. In addition, local and remote users can connect using a variety of connection methods, including modem dial-up lines or high-speed dedicated leased lines into the Internet. An Internet VPN may ultimately replace all the on-site equipment associated with remote access services, essentially moving all that functionality to an ISP.

Several initiatives and standards are under development for implementing Internet VPN. For instance, the Internet Engineering Task Force (IETF) assembled a working group to render several Internet-Drafts that suggest the architecture for and various aspects of Internet VPNs. One such Internet VPN studied by IETF is Transparent LAN Service (TLS). TLS is an Internet VPN that takes advantage of local connections to an ISP and wide area connections provided by the Internet to enable subscribers whom are not all connected to a single LAN to function as a single LAN.

Although the IETF has offered suggestions within its Internet Drafts regarding the concept of TLS, the protocol with which to create and implement a TLS has been left to the discretion of the implementer. Accordingly, the present discussion provides a system and method of the implementation of TLS.

WO 02/18965 A refers to an aggregation unit to aggregate physical connections from customers for presentation to an access router. These functions are accomplished by configuring ports of the aggregation unit such that each has a unique identifier in the place of a layer 2 address originally in the layer 2 header. The layer 2 address of the customer device connected with the port is associated with, and therefore determined from, the IP address of the attached device.

US 2002/0024964 A1 describes a network in which transport technology is independent of network access technology. An out-of-band network may be used to carry advertisements to an update facility. The update facility may use layer 3 destination address information and at least a part of context information to determine layer 3 destination address of an edge device of the transport network associated with an addressed customer device. Virtual private networks are supported, as context information is used to distinguish different customers with overlapping layer 3 addresses.

Metz C., "Layer 2 over IP/MLPS", IEEE Internet Computing, IEEE Service Center, Piscataway, N.J., US, July 2001, pages 77-82, XP001060238, ISSN: 1089-7801 describes, inter alia, the use of tunnels to extend L2 circuits. A tunnel defines the IP/MLPS network's specific points of entry and exit for that portion of he end-to-end L2 circuit. Packets traversing a tunnel consist of a payload - the L2 frame - and the appropriate IP or MLPS header for delivering the packet to its destination.

WO 01/99354 A describes a communication device including a virtual private network (VPN) accommodation function in a VPN for connecting a network in an organization or between organizations through the internet, the device comprising first means for creating a VPN address of an address type which includes a VPN number for uniquely identifying a VPN in a certain range and an address used in a closed state in an organization or between organizations.

EP 1 045 553 A refers to methods and apparatus for routing packets through a communications network, wherein a respective distinct broadcast address is assigned to each of a plurality of distinct sets of virtual ports. A respective egress address is assigned to each packet entering the network via an ingress virtual port. The packet is routed according to the respective egress address. The routing is restricted to virtual ports belonging to the distinct set of virtual ports that includes the ingress virtual port. The distinct sets of virtual ports and their associated broadcast addresses define isolated virtual private networks within the network.

Brittain P: et al.: "MLPS Virtual Private Networks", IEEE Communications, November 2000, XP002217621 refers to the field of MLPS virtual private networks. Inter alia, LPS tunnels providing an encapsulation mechanism for VPN traffic are described. Automatic methods for determining VPN routes allow the configuration complexity of an MLPS VPN to scale linearly with the number of sites in the VPN, as opposed to geometric scaling for other IP-tunneling VPN solutions. Best scalability of peer discovery is achieved by overlaying the VPN peer and route discovery using a routing protocol or by use of a directory.

The article "MLPS: The Magic Behind the Myths" by Armitage G., IEEE Communications magazine, IEEE Service Center, Piscataway, N.J., US, vol.38, no. 1 January 2000, pages 124-131, XP000908346, ISSN: 0163-6804 reviews key differences between traditional IP routing and the emerging MLPS approach. It is shown that MLPS adds the ability to forward packets over arbitrary non-shortest paths, and emulate high-speed tunnels between IP-only domains - capabilities critical to service providers who need to better manage resources around their backbones, or who are planning IP VPN services.

According to the invention, there is provided a network device for providing multipoint services as defined by independent claim 1 and a method of transmitting a packet in a network as defined by independent claim 10.

Advantageous embodiments of the invention are defined by the dependent subclaims.

### BRIEF DESCRIPTION OF THE DRAWINGS:

The objects and features of the invention will be more readily understood with reference to the following description and the attached drawings, wherein:
FIG. 1A is a diagram of a network providing TLS services according to an embodiment of the invention;
FIG. 1B is a diagram of a point-to-point network.
FIG. 1C is a diagram of a multipoint network according to an embodiment of the invention.
FIG. 2 illustrates a layer 2 (L2) multiprotocol label switching (MPLS) packet encapsulation according to an embodiment of the invention;
FIG. 3 is a TLS deployment where groups of ports operate as independent 12 switches according to an embodiment of the invention;
FIG. 4 shows an example of a mapping scheme according to an embodiment of the invention;
FIG. 5 shows an example of another mapping scheme which may be employed in an embodiment of the invention; and
FIGS. 6A-B are flowcharts of a method for providing TLS services to subscribers connected to a network according to an embodiment of the invention.

### DETAILED DESCRIPTION OF THE PREFERRED

### EMBODIMENTS:

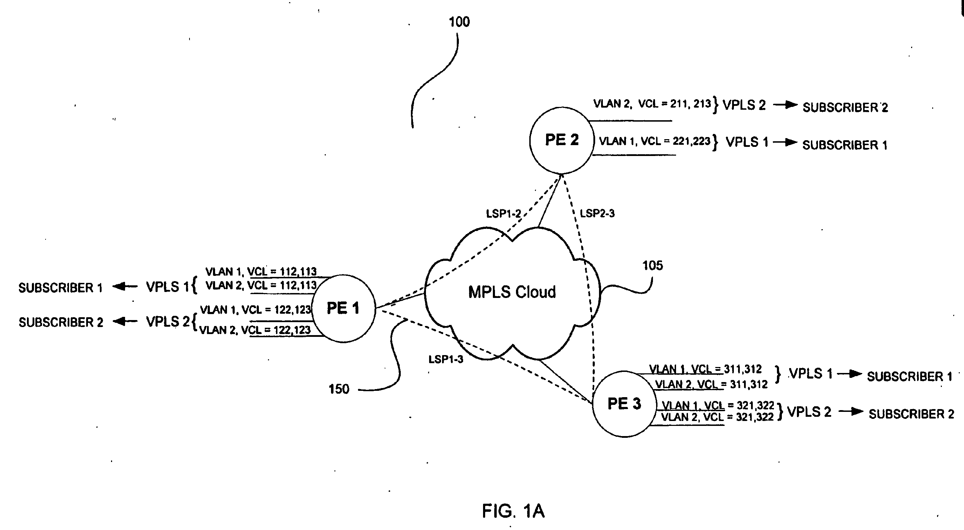

The invention provides a system and method for offering TLS connectivity between geographically dispersed subscriber sites across MAN (Metropolitan Area Networks)/ WAN (Wide Area Networks), as if the subscribers were connected through a Local Area Network (LAN). As shown in FIG. 1A, a network 100 offering TLS may appear virtually as a LAN to the ISP subscribers. However, in a TLS network, the subscribers are not all connected to a single LAN; the subscribers may be spread across a metro or wide area. In essence, a TLS glues several individual LANs across a metro area to appear and function as a single LAN. As a result, TLS technology is poised to become very important for Metropolitan Service Providers (MSP)s.

One aspect of the invention is to extend corporate bridging domains over multiprotocol label switching (MPLS) clouds 105 on the Internet and interconnect remote corporate private networks using TLS. TLS can leverage the inherent broadcast capabilities for router discovery along MPLS cloud 105. The switching application of TLS provides a virtual LAN switching service to end users, i.e., the subscribers. The switching application may also be used for interconnecting subscriber switches across a MAN/WAN network. Therefore, if several sites, such as a corporation, university and hospital, subscribe to a TLS service, these multiple subscribers may appear as if these sites are co-located, and are connected via a local Ethernet switch providing bridging services for the delivery of an Ethernet service to the multiple subscribers. Thus, the invention can be used to aggregate all multiple subscribers' traffic and carry the traffic via an uplink to a service provider as opposed to having a separate uplink for each subscriber.

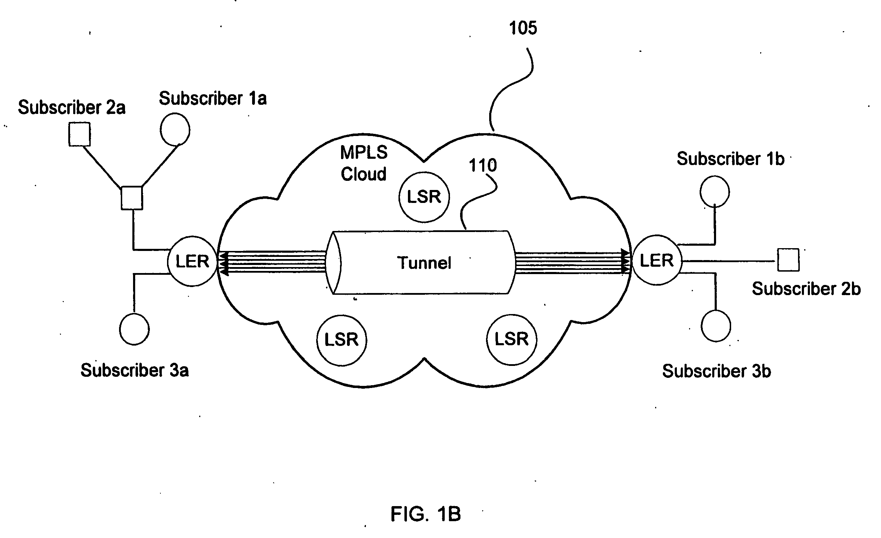

TLS may be introduced as an (Layer 2) L2 (Provider Provisioned VPN) PPVPN solution. Layer 2 VPN (L2VPN) allows a network operation to build a Layer 2 VPN with Ethernet as the interconnect; and MPLS-based L2VPN allows one to signal an Ethernet connection across a packet switched networks. Both of these, however, offer point-to-point Ethernet services as shown in FIG. 1B. What distinguishes TLS from L2VPN and MPLS-based L2VPN is that VPLS offers a multipoint service. This means in the case of TLS, the subscribers in the VPN are connected by a multipoint network, which offers multiple point to point services.

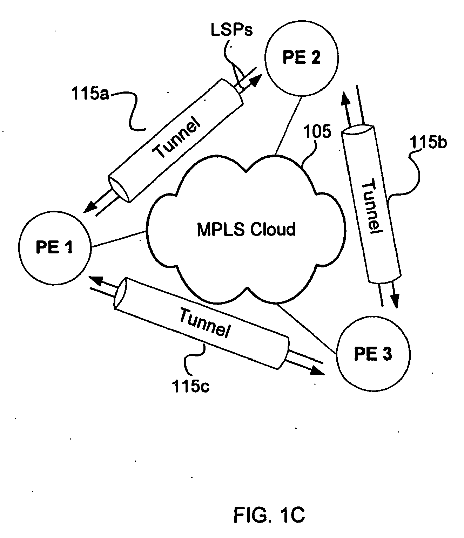

The TLS offers a multipoint Layer 2 service over multiple tunnels 115a-c across packet switched networks, such as service provider networks (FIG. 1C). If a subscriber wishes to establish a communication link over tunnels 115a-c of the TLS system, the subscriber may access any one of the multiple tunnels 115a-c to which the subscriber has been assigned a subscription. In a point-to-point VPN system, only a single common tunnel 110 is established between subscribers 1a-b, 2a-b, and 3a-b, as shown in FIG. 1B.

Service provider networks may include subscriber facing access points into their network called provider edges (PE)s 110, as depicted in FIG. 1A. Each subscriber's traffic may be mapped to some logical entity on the ingress of a PE 110. When a subscriber requires a LAN segment, a logical endpoint called Virtual Private LAN Segment (VPLS) may be used to receive and forward the subscriber's traffic over the TLS. In some contexts, the terms "TLS" and "VPLS" are used interchangeably.

In a TLS, a remote subscriber may dial into a service provider network located at an ISP. A LSP (label switched path) tunnel 115 for TLS is then established across the Internet to a corporate gateway server. Each LSP tunnel 115 may be a point-to-point within which individual subscriber virtual circuits exist. The point-to-point service may be facilitated through a pair of LSPs facing in opposite directions, to form a single virtual pipe or tunnel 115. Each LSP tunnel 115 aggregates the virtual circuit of subscribers assigned to each respective tunnel into a single tunnel. To implement such a network, a TLS device may include the following functional elements: mapping; signaling for tunneling multiplexing; encapsulation, packet forwarding, address learning; and flooding of broadcast, multicast and unknown unicast destination traffic over MPLS.

In conducting mapping, the LSP tunnels 115 may transport L2 packets from one PE to another. The PE may be an endpoint in a VPLS. Two LSPs are created between a pair of PEs, one in each direction to form an LSP tunnel. For instance in FIG. 1A, a LSP1-2 tunnel exists between PE1 and PE2. Another LSP2-3 tunnel lies between PE2 and PE3. Similarly, LSP1-3 forms a tunnel between PE1 and PE3.

A full mesh of LSPs tunnel between all the PEs may be required to create the "transport" layer for the virtual LAN (VLAN). The VPLS may be a domain of L2 medium access control (MAC) addresses and VLANs. The VPLS may have multiple subscribers wherein each subscriber can have its own independent set of VLANs, if a VPLS is dedicated to a subscriber. Thus, the VLAN Ids used by different VPLSs may overlap within each PE.
A typical scenario in a PE may be as follows:

**TABLE 1**

| | |
|---|---|
| VPLS 1 --- | Subscriber A. VLAN 1 |
| | Subscriber A. VLAN 2 |
| | |
| | Subscriber B. VLAN 101 |
| | Subscriber B. VLAN 102 |
| | |
| VPLS 2 --- | Subscriber Q. 4K VLANs |

Since subscribers' VLANs can be overlapping within a VPLS, the PEs may include the capability of associating each subscribers' VLANs with a unique identifier for identification.

Furthermore, since many subscriber links can be multiplexed over the same tunnel 115, the PE devices may need to determine which PE devices constitutes a given VPLS. Mapping is the process by which the PEs determine all the subscribers' ports that belong to the same VPLS. More specifically, a given PE that has one or more subscribers' ports that belong to a particular VPLS may need to determine all other PEs that have one or more ports that belong to the same VPLS. In the example given above in Table 1, this means that PE1, PE2, and PE3 determine that subscriber A and subscriber B both belong to VPLS 1, and that each PE knows to which PE the subscriber's device is attached.

In addition, the PE devices may be capable of establishing the transport tunnels 115 to other PEs in order to deliver the subscriber's traffic. Thus, in performing the signaling function of the TLS, the PE device may serve as an edge router capable of running a signaling protocol an/or routing protocols to exchange virtual channel (VC) label information. The PE devices may be capable of establishing transport tunnels 115 to other PEs to deliver virtual circuit (VC) LSP traffic transmitted from the subscribers to a network device. As shown in FIG. 1A, a VPLS may be created on top of the PE tunnel mesh 150 by creating a full mesh of VCs. Each VC may be identified by a separate VC label for each ingress PE. An egress PE signals the VC label to be used by the ingress PE for a given VPLS. FIG. 1A illustrates the VPLS domains overlaid on the PE tunnel mesh.

FIG. 1A shows a TLS with two VPLS domains over MPLS cloud 105. VPLS 1 is used by Subscriber 1 and VPLS 2 is used by Subscriber 2.

In FIG. 1A, as discussed above, PEs 1, 2 and 3 are the provider edges so that point-to-point LSPs are created between each PE and adjacent PE, in each direction. Thus, LSP 1-2, LSP 2-3, and LSP 1-3 form the PE tunnel mesh 150.

As shown in FIG. 1A, the VC labels allocated by each PE for a VPLS may be different for each ingress PE. For example, PE1 may allocate VC label 112 for PE 2 and VC label 113 for PE 3 for VPLS 1. Subscriber 1 may create a VLAN 1, which resides on PEs 1 and 3. Subscriber 1 may also create VLAN 2, which resides on PEs 1, 2 and 3. Subscriber 2 may create a VLAN 1, which resides on PEs 1, 2 and 3. Subscriber 2 may create VLAN 2, which resides on PEs 1 and 3. Thus, subscribers 1 and 2 have overlapping VLAN Ids.

Both subscribers 1 and 2 may share the same tunnel mesh formed by LSP 1-2, LSP 1-3 and LSP 2-3. The QoS (quality of service) parameters for each LSP may be configured by the respective system operators so that the terms of the individual subscriber's contracts are satisfied.

The endpoint of each LSP may appear to be a virtual Ethernet port to each PE. Traffic coming into MPLS cloud 105 at each PE may then be forwarded over the LSPs just like Ethernet traffic over any other physical ports belonging to a VLAN, as long as the packet includes the necessary encapsulation.

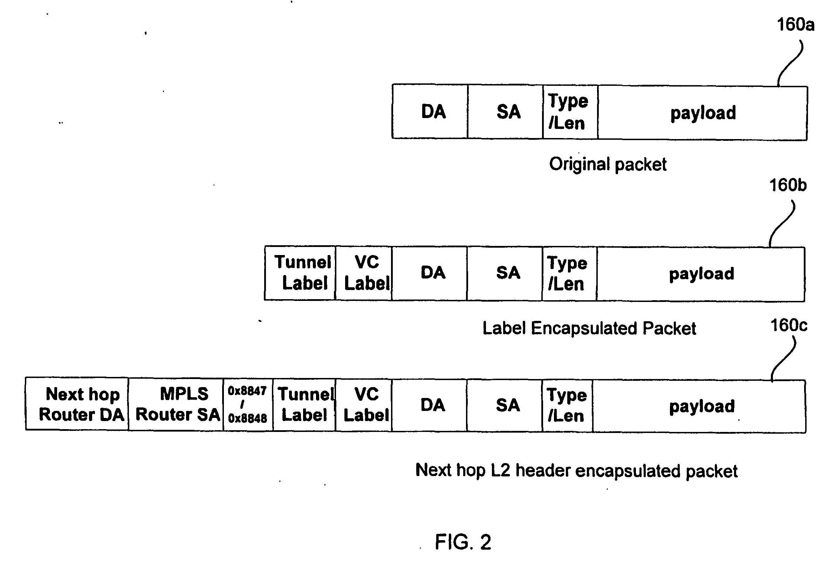

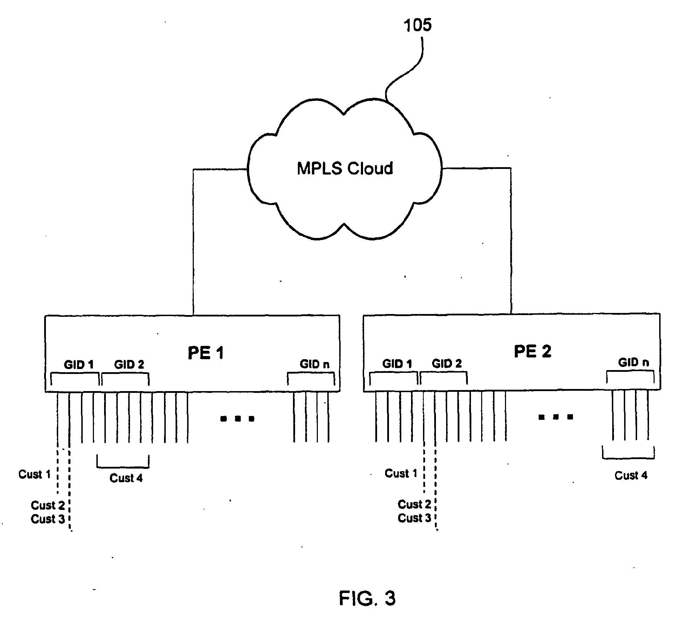

A packet sent over an LSP tunnel between two PEs may need to be encapsulated by a stack of two MPLS labels--a tunnel label and a VC label, as shown in FIG. 2, before the packet is sent. Label stacking may be used to create hierarchies, which separate the LSPs and the virtual channels that exist inside tunnel 115. The tunnel label may be positioned at the top of the stack to uniquely identify the LSP from one PE to the other in a single direction. The VC label may represent each virtual channel. The VC label may be used by the egress in order to map the channel to the individual Group ID (GID) and VLAN ID (VID). As shown in FIG. 3, the ingress of a PE can be organized into groups of ports, which are identified by the GID. Each port group represents a VPLS domain of L2 MAC addresses and VLANs. FIG. 3 shows a TLS deployment where groups of ports operate like independent L2 switches. All the VLANs in a port group may have unique VLAN Ids.

The second label, shown in FIG. 2, may be the VC label, which may be positioned at the bottom when the original packet 160a is encapsulated in a two-label stack. Each egress PE may identify the label encapsulated packet 160b using the VC label. The egress PE or the disposition router may indicate the VC label binding to a VPLS using a LDP (label distribution protocol) downstream unsolicited mode message. The LDP is the set of procedures and messages by which label switching routers (LSRs) establish label switch paths. This way, an ingress PE knows the VC label to encapsulate the packet 160a with, so that the egress PE uniquely maps the encapsulated packet 160b to a VPLS.

If the encapsulated packet 160b is transported over an Ethernet to the next hop LSR, a new Ethernet header may be added to the encapsulated packet 160b before the packet is transmitted over the output Ethernet port as shown in FIG. 2. The EtherType may be established as 0x8847 for a unicast MPLS packet 160c and 0x8848 for a multicast packet 160c. FIG. 2 illustrates an L2 MPLS encapsulation.

In forwarding the packet 160b, when the packet reaches the destination PE, ingress PE may be responsible for classifying the packet based on the QoS parameters associated with the packet. Once the packet has been classified, the tunnel label may be stripped off by the ingress routers of the destination PE. Thus, the egress VPLS may receive a packet that has already had the tunnel label removed. The egress VPLS may use the VC label to point to the GID and VID and to determine the local ports. The destination address (DA) of the encapsulated packet and the VID may be used to take further L2 decisions, such as learning and bridging, similar to an Ethernet packet arriving from a physical Ethernet port. Network 100 may be configured so that if the Ethernet packet sent on the LSP is not a tagged 802.1Q frame, only non-qualified learning may be supported on a PE. That is only MAC addresses will be learnt.

As mentioned above, one feature of TLS is that it offers a multipoint service. Thus, the entire service provider network may be configured to appear as a single logical learning bridge for each VPLS that network 100 supports. Learning consists of associating source MAC addresses of the packets with the ports on which they arrive. This association may occur within a forwarding information base (FIB), which is the information that is maintained in the routers and contains the set of forwarding paths reflecting the various policy and QOS rankings available for the packets to reach each known destination. Thus, the FIB may be used for forwarding the packets. For example, suppose a PE receives a packet with source MAC address S on port P. If subsequently, the PE receives another packet with destination MAC address S, the PE will know that it should send the packet out on port P. However, when a bridge receives a packet to a destination that is not stored in its FIB, the bridge may flood the packet on all the other ports. Similarly, a PE may flood packets to an unknown destination to all other PEs in the VPLS.

There may be two modes of learning: qualified and non-qualified learning. In qualified learning, the learning decisions at the PE may be based on the subscriber Ethernet packet's MAC address and VLAN tag. Within one VPLS, there may be multiple logical FIBs, one for each subscriber VLAN tag identified in a subscriber packet. Every PE may have at least one FIB for each VPLS that the PE participates in. Thus, the broadcast domains may be defined in a VPLS by the VLANs and multicast groups setup in the VPLS.

Non-unqualified learning, learning may be based on a subscriber Ethernet packet's MAC address only. In other words, at any PE, there may be only one FIB per VPLS in non-qualified learning. In the non-qualified mode, the MAC addresses may not be qualified by any other membership like the VID. The VPLS itself may serve as the broadcast domain in this mode. Multicast groups can exist and broadcast to members of the multicast group may be restricted to the group. If untagged packets are to be supported over MPLS cloud 105, the non-qualified mode may be assumed.

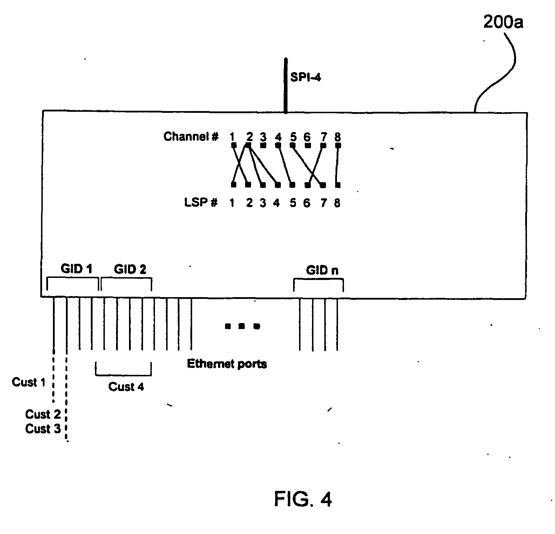

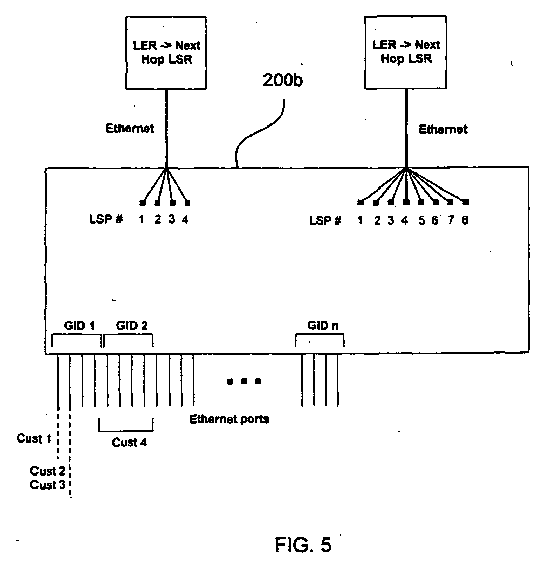

In the embodiment shown in FIG. 4, in network device 200a, LSPs 1-8 may be configured as virtual Ethernet ports. Virtual switches may be positioned within each PE. The virtual switches may include logical ports, such as virtual Ethernet ports, as interfaces. Each LSP may have a unique physical port associated with it. For example in the embodiment of FIG. 5, the physical port may be an interface such as a System Packet Interface Level 4 (SPI-4) port channel. In network device 200a, SPI-4 may serve as an interface for packet and cell transfer between a physical layer (PHY) device and a link layer device, for aggregate bandwidths of OC-192 ATM and Packet Synchronous Optical Network (SONET)/ Synchronous Digital Hierarchy (SDH) (POS), as well as 10 Gb/s Ethernet applications. OC-192 is a type of fiber-optic cable that can carry up to 9,953Mbps (megabits per second), or about 10Gbps (gigabits per second). Although the SPI-4 interface may be designed to meet this particular application, the SPI-4 may be installed in any type of network as a system packet interface for data transfer between a link layer and a PHY device.

The embodiment shown in FIG.4 may be installed in a line card where a SPI-4 interface is used to interface with a dedicated network processor performing routing and MPLS functions. The SPI-4 interface may be configured to relieve the network processor of all the TLS data path processing. Alternatively, the physical port can be an Ethernet port in network device 200b shown in FIG. 5.

The line card in conjunction with the SPI-4 interface may perform the packet forwarding functions. Each line card may perform an independent lookup of a destination address for each packet received on a local copy of the forwarding table. The packet may be switched across a crossbar switch fabric to the destination line card. The basic functions of the line card may be queuing, congestion control and statistics gathering.

FIG. 4 shows an example of LSP to SPI-4 port channel mapping network device 200a, and FIG. 5 shows an example of LSP to Ethernet port mapping network device 200b.

The data structure, which may be employed to implement the invention, may include several lookup tables. A key stored in the table may be associated with each lookup table. A search algorithm may compare the key value with the values stored in the table. If a table entry matches the key, relevant fields from that entry may be used for further processing.

For instance, the invention may perform a physical port to group identification mapping. The group identification for each Ethernet port may be stored in each ingress port. A CPU (not shown) attached to a chip or SPI-4 interface may be connected to all the port groups. A table, which includes the group identification and label switched path, may be used as a key to map to a VC label table. This group identification and label switched patent table may be stored in an external memory SRAM (not shown) accessed by the LSP associated port egress logic. This table may be stored in the ingress of all LSP associated ports. Another table that the invention may include is a label switched path to port channel table, which may include the physical (port channel) as the entries. This table may be stored in a SPI-4 port egress.

In a table, which includes group identification and VLAN identification columns, each entry may contain a list of port LSPs and non-LSP associated physical ports, which map to a VLAN. The VLAN may be assigned to the port group given by the GID, which may be the VLAN table and may be stored in each Ethernet port ingress. In the qualified mode, this table may be looked up using the group identification and VLAN identification as the key. In the non-qualified mode, the group identification may be used as the key. Each entry in the L2 multicast table may contain a list of ports and port LSPs which map to a L2 multicast group. The L2 multicast table may be used to flood multicast packets to only those ports which have members of the L2 multicast group, instead of flooding packets to the entire VLAN. The L2 multicast table may be looked up using the group identification, the virtual channel identification and the multicast destination address as the key in the qualified mode, and the group identification and destination address as the key in the non-qualified mode.

In the L2 Address table, the L2 lookup may be performed using the group identification, VLAN identification and destination address in the qualified mode and the group identification and destination address as the key in the non-qualified mode. The L2 Address table may return the L2 table entry which contains outgoing physical (Ethernet /SPI-4) port and the LSP number if the packet is destined to go out on an LSP. The L2 Address table may be configured to perform the same functions as an ARL (address resolution logic) table used by the ingress of each Ethernet port. Another table that may be employed by the invention is a table of 32-bit tunnel labels, columns and next hop the destination address columns indexed by the LSP number. This table may be used by the egress logic of the LSP associated port. There may be one tunnel label table per egress port. The MPLS Router MAC address table may be used by the egress logic of a port associated with an LSP to maintain MPLS router MAC address.

The invention may be configured to perform Ethernet packet forwarding for L2 processing using TLS. In situations where a packet arrives on an Ethernet port, which is not associated with MPLS LSPs, the treatment applied to the packet may depend upon whether the packet is a L2 unicast packet or a L2 unknown unicast/multicast/broadcast packet. When an Ethernet packet arrives on a physical port, if the packet is unicast, for the qualified mode, the GID, VID and the DA of the packet may be used to perform a lookup in the L2 Address table. In the non-qualified mode, the GID and DA of the packet may be used to perform the L2 address lookup. If there is a match, and if the outgoing port is a port LSP, the packet may need to be encapsulated before being forwarded.

The packet may be forwarded to the egress physical port obtained from the L2 address lookup. The LSP on which the packet is to be transmitted and the VPLS (GID) to which the packet belongs may be sent to the egress port. The egress logic may use the incoming GID and LSP number from the L2 address lookup, to lookup the group identification and label switched path, which maps to VC Label table so that the VC label is obtained. The VC label may be first appended to the packet header in front of the DA.

The egress logic may use the outgoing LSP number to index into the Egress LSP to the Tunnel label table. The tunnel label may be appended in front of the VC label. As discussed above, the tunnel label may be the egress tunnel label, which maps to the egress tunnel LSP.

Optionally, an additional Ethernet header may be required to send the packet 160c to the next hop. The MPLS Router MAC address may be the SA (source address) and the next hop router DA may be obtained from the Egress port to next hop DA table. The EtherType field may have a value of 0x8847, as illustrated in FIG. 2.

If there is no match, the unknown packet may need to be flooded onto all the ports and port LSPs of the VPLS VLAN. An unknown unicast or broadcast packet may be flooded to all the physical ports and LSPs associated with the VPLS VLAN the packet belongs to. The port and port LSP list may be stored in the GID and VID table, which includes the group identification and VLAN identification. The port and port LSP list may be looked up using the GID and the VID as the key in the qualified mode and using the GID in the non-qualified mode. The packet may be transmitted over the listed ports and port LSPs using the encapsulation required for each LSP.

A multicast can be treated exactly the same way an unknown unicast or broadcast packet is treated. A multicast packet may be optionally switched using the L2 multicast table. If this option is chosen, the port and port LSP list may be stored in the L2 multicast table. This table may be looked up using the GID, VID, and DA as the key in the qualified mode and the GID and DA in the non-qualified mode.

On each egress port associated with an LSP, the VC label from the VC label table and the tunnel label from the tunnel label table may be appended to the packet header. Optionally, the next hop DA may be obtained from the Egress port to next hop DA table and the SA may be the MPLS Router MAC address. The EtherType for multicast/broadcast may be 0x8848.

The packet may then be broadcast to other non-LSP associated Ethernet ports using 802.1q and 802.1p rules for tagged and untagged packets.

The invention may also provide LSP packet forwarding for L2 forwarding when a packet arrives on an Ethernet port or an SPI-4 port, which is associated with MPLS LSPs. For an L2 Unicast MPLS packet, when an encapsulated Ethernet packet arrives on a LSP associated port, if the port is an Ethernet port, the incoming DA may be the MPLS router DA. When this configuration is detected, the DA, SA and the Ether Type fields (assuming the packet is an Ethernet II packet) are stripped off. For an SPI-4 MPLS facing (LSP associated) port, the Ethemet-encaps-in bit in a TBD register may indicate if the packets will arrive with the Ethernet header.

Also, the tunnel label may be stripped off. The presence of the Tunnel Label may be indicated by a PHP (Penultimate Hop Popping) bit in a configuration register for LSP associated ports. This register may be TBD.

The VC Label may be used to index into the VC Label to GID and LSP table and the VPLS and VLAN associated with the packet may be obtained. Thus, the GID may indicate the VPLS.

The priority of the packet may be obtained from the VLAN tag. Optionally, the priority of the frame can be a function of the channel number on which the packet arrived.

Then the L2 address table lookup may be performed using the GID, VID and the DA in the qualified mode. In the non-qualified mode, the GID and DA may be used to lookup the L2 table. If there is a match and the resulting entry does not indicate an LSP association, the packet may be forwarded on the Ethernet port obtained from the entry. If there is an LSP associated with this DA, the packet may be dropped, indicating an error condition.

If the L2 lookup fails, the packet may be designated as an unknown unicast, and process as discussed above. 802.1q and 802.1p standard rules may apply for forwarding the received packet over the egress Ethernet port.

When an encapsulated multicast Ethernet packet arrives on a LSP associated port, if the port is an ethernet port, the incoming Ethernet encapsulation may be stripped off as in the unicast case. If the port is a SPI-4 port, the Ethernet encapsulation may optionally be stripped off. The tunnel label may also be stripped off.

If the packet is a broadcast or unknown unicast packet, the VC label may index into the VC label to the GID and LSP table and the VPLS VLAN membership of the packet may be determined. The packet may then be forwarded over all the physical ports of the VPLS VLAN, which are not associated with any LSP. The port list may be obtained by the GID and VID table lookup using the GID and VID as the key in the qualified mode or the GID as the key in the non-qualified mode. The packet may not be sent over the LSPs listed in the table entry to ensure a split horizon.

Multicast packets can be treated exactly the same way as broadcast or unknown unicast packets. Optionally, multicast packets may be switched using the L2 multicast table. In this mode, the GID, VID and DA in the qualified mode or the GID and DA in the non-qualified mode may be used to lookup in the L2 multicast table and the list of ports and port LSPs are found. The packet may be forwarded to all the ports not associated with an LSP.

In performing address learning, the treatment applied to the packet may depend upon whether the packet is received from a non-LSP port or a LSP port. When a unicast packet is received from a non-LSP associated Ethernet port, an L2 address table lookup may be performed using the GID, VID, and SA as the key in the qualified mode or the GID and SA as the key in the non-qualified mode. If there is a hit, the hit bit may be updated. Otherwise, a new entry may be created in the L2 address table. The Ethernet port number on which the packet was received may be stored in the L2 address entry.

When a unicast packet is received on an LSP, the VC label may be used to index into the VC label to the GID and LSP table. An L2 address table lookup may be performed using the GID, VID, and SA as the key in the qualified mode or the GID and SA in the non-qualified mode. If there is a hit, the hit bit may be updated. If there is a miss, a new entry may be created in the L2 table. The entry may contain the ingress port number on which the packet was received and the LSP number taken from the VC Label to the GID and LSP table. The physical port on which the packet arrived may be assigned the ingress port number.

The software running on the system CPU (not shown) may be responsible for setting up some of the data structures employed by the invention. For example, the physical port to GID table can be configured by the CPU (not shown) to suit the requirements of the system. The data structure for the egress LSP to tunnel label table may contain the list of tunnel labels for the PE tunnel mesh. The indices to the tunnel labels may be the LSP numbers. The software may configure this table on the LSP associated egress ports when the tunnel mesh is created. An entry may be created in the GID and LSP to VC label table every time a new VPLS is configured. The PE (Egress PE) may signal to its peer that the VC label to be used to send packets to the new GID using the LDP unsolicited downstream message. The ingress PE may then create an entry in this table. The index corresponding to the tunnel label used to route the packet to the egress PE may be used as the LSP number to lookup into the GID and LSP entries which can be mapped to the VC label table. When a new VPLS is created in an (egress) PE, an entry may be created in the VC Label to the GID and LSP table. The VC label signaled to the ingress PE may be used as the index and the GID and egress LSP number (which maps to the tunnel LSP to be used to route the packet to the ingress PE) and may be stored in the table on the egress PE.

The CPU may configure the LSP to port channel table when the PE tunnel mesh is created. For each LSP number (which is the index to the tunnel table), the physical port channel number may be stored in this SPI-4 port table. An entry may be created in the GID and VID table when a new VLAN is configured for a port group. The physical ports as well as the port LSP numbers may be stored in the entry. Network 100 may be configured so that address learning/aging may need to be performed by the system CPU only if the CPU based learning and aging is selected by the system operator. Hardware based learning and aging was been described above.

The L2 Multicast table may be a table for the creation of L2 multicast groups. The CPU may create an entry in the L2 Multicast table whenever an L2 multicast group is created. Each entry may contain the list of ports and port LSPs on which members of this L2 multicast group (identified by GID, VID, DA) are present. An existing entry may be updated to add or delete a port or port LSP depending on members joining or leaving the multicast group. The egress port to next hop DA table may be an entry stored in each Egress port, to be configured when the CPU learns of the next hop's DA. The CPU may also configure the MPLS Router MAC address.

The PHP bit may be a bit in a TBD register in an LSP associated port. The CPU may configure the PHP bit on a per LSP associated port to know if penultimate hop popping is being performed by the LSR connected to the switch. The Ethernet Encaps bit may also be a bit stored in a TBD register in an LSP associated port. An Ethernet Encaps out-bit may be configured on a per LSP associated port to determine if the packet being sent on an egress LSP includes a next hop DA, router SA, 0x8847/0x8848 encapsulation. Another bit that may be stored in a TBD register in an LSP associated port is an Ethernet Encaps in-bit. This bit also may be configured on a per LSP associated port to determine if the packet being received on an ingress LSP includes the next hop DA, router SA, 0x8847 or 0x8848 encapsulation.

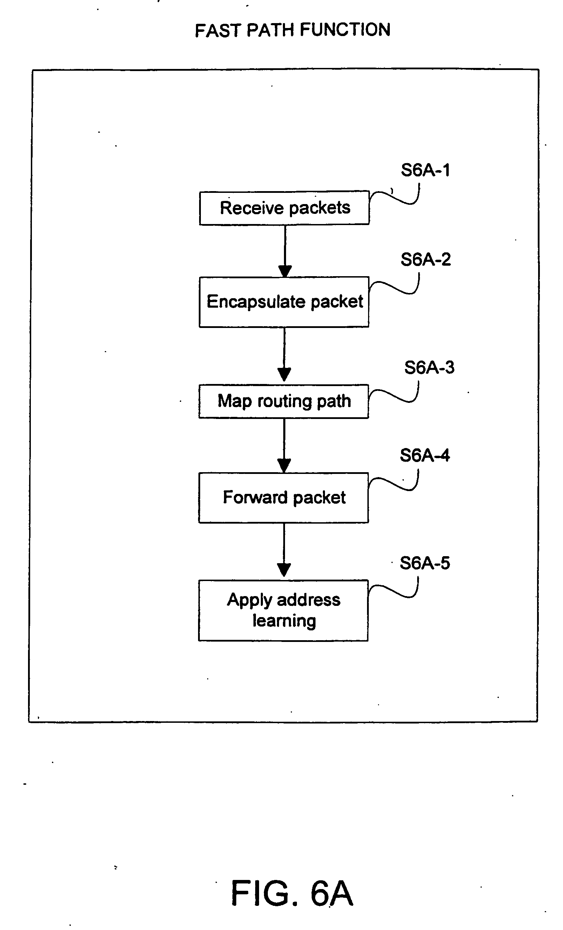

FIG. 6A is a flow chart of a method for providing multipoint services to subscribers according to an embodiment of the fast path function of the invention. At Step S6A-1, a packet is received at a port such as an Ethernet port of a network entity such as a subscriber's device. The packet may be encapsulated, in Step S6A-2, before the packet is transmitted across the network. A port interface, such as a SPI-4 interface, may map the routing path for the packet in Step S6A-3. In Step S6A-4, the PE may forward the packet to the destination entity. In Step S6A-5, as the packet is being transmitted to a destination PE, the routing path and the QoS of the packet may be learned by the PEs.

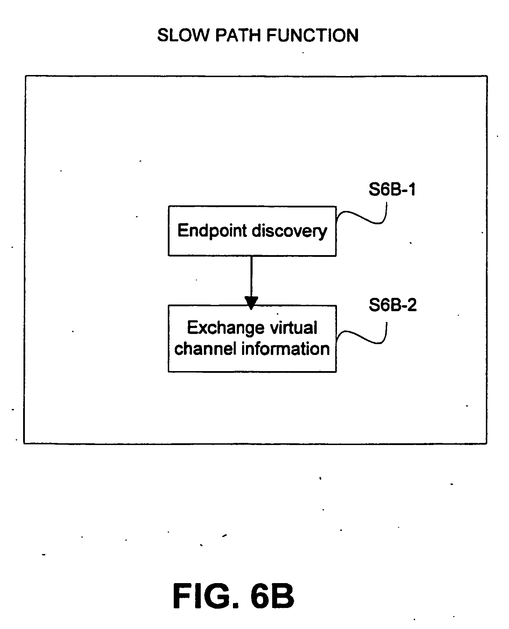

FIG. 6B is a flow chart of a method for providing multipoint services to subscribers according to an embodiment of the slow path function of the invention. At Step S6B-1, the PE maps the local subscriber ports to a VPLS. At Step S6B-2, a signal protocol, which may be included in the PEs, may be used to exchange the VC label information associated with each port.

The invention may include several features within the TLS services provided to subscribers. For example, the VPLS may be a logical entity to which unique VLANs are mapped. The VPLS can map to a group of subscriber facing ports in a PE. The subscriber facing port group can be mapped to an explicit Group ID (GID). This GID can be carried in a custom header in the packet received from the subscriber facing port for further processing by the TLS data path forwarding engine. On the PE ingress, all the VLANs on a VPLS may include unique VIDs. Thus, a subscriber can be assigned to one or more Ethernet ports and all the subscriber's VLANs may reside behind that port group. More than one subscriber can share the same ingress Ethernet port group as long as they share the same set of unique VLAN IDs. The QoS guarantees for each subscriber may be policed at the ingress PE. Network 100 may be configured so that it is the MSP's (Metro Service Provider) responsibility to make sure that all the traffic going out on the MPLS port is shaped such that the individual subscriber guarantees can be met. Another feature offered by the invention is that the VC label used in the PE may be unique across all VPLSs. Furthermore, a single tunnel mesh may be used between all the PEs.

One having ordinary skill in the art will readily understand that the steps of the method may be performed in different order, or with multiple steps in parallel with one another. Also, one having ordinary skill in the art will understand that a network device may be configured to perform the above-described method either in silicon or in software. Accordingly, one will understand that the switching configurations described herein are merely exemplary. Accordingly, although the invention has been described based upon these preferred embodiments, it would be apparent to those of skill in the art that certain modifications, variations, and alternative constructions would be apparent. In order to determine the metes and bounds of the invention, therefore, reference should be made to the appended claims.

## Claims

1. A network device (100) for providing multipoint services, the network device (100) comprising:
a port configured to send and receive a packet (160a, 160b, 160c), wherein the port is connected to a first network entity;
a mapping module (200a; 200b) connected to said first network entity and configured to determine a virtual private LAN segment (VPLS 1, VPLS2) assigned to said port;
a signaling module connected to said mapping module and configured to determine a virtual channel (LSP1-2, LSP1-3, LSP2-3) information assigned to said port, wherein said signaling module is configured to exchange said virtual channel (LSP1-2, LSP1-3, LSP2-3) information to a second network entity;
an encapsulation module connected to said signaling module and configured to add stacking labels to a header of said packet (160a, 160b, 160c), wherein said encapsulation module is configured to assign a quality of service to be applied to said packet (160a, 160b, 160c),
**characterized by**
a port interface connected to said first network entity and configured to map a routing path for said packet (160a, 160b, 160c) by selecting the routing path from a forwarding information base; and
an address learning module connected to said first network entity and said second network entity, wherein said address learning module is configured to learn said routing path to transport said packet (160a, 160b, 160c) from said first network entity to said second network entity by associating within the forwarding information base a source MAC address of the packet (160a, 160b, 160c) with the port on which it arrives.

2. The network device (100) as recited in claim 1, wherein the mapping module is configured to determine at least one subscriber assigned to said virtual private LAN segment (VPLS1, VPLS2).

3. The network device (100) as recited in claim 2, further comprising at least one provider edge (PE1, PE2, PE3) connected to said first network entity and said second network entity, wherein said provider edge (PE1, PE2, PE3) is configured as an access point of said virtual private LAN segment (VPLS1, VPLS2) for said at least one subscriber to receive said multipoint service.

4. The network device (100) as recited in claim 3, wherein said provider edge (PE1, PE2, PE3) is configured to map traffic of said at least one subscriber to provide said subscriber said multipoint service.

5. The network device (100) as recited in claim 4, further comprising: at least one pair of provider edges (PE1, PE2, PE3) connected to said first network entity and said second network entity, wherein said at least one pair of provider edges (PE1, PE2, PE3) form a transport tunnel (110, 115a, 115b, 115c) for transporting said traffic to provide said multipoint service to said at least one subscriber.

6. The network device (100) as recited in claim 5, wherein said port interface comprises a SPI-4 interface configured to perform lookup operations within at least one lookup table.

7. The network device (100) as recited in claim 6, wherein said at least one table comprises a group identification data and label switched path data.

8. The network device (100) as recited in claim 7, wherein said group identification of said lookup table is configured to map to a first virtual LAN associated with said port;
and wherein said first virtual LAN differs from a second virtual LAN associated with another port connected to said network device (100).

9. The network device (100) as recited in claim 8, further comprising at least one group of ports, wherein said at least one group of ports is configured to operate as an independent layer switch.

10. A method of transmitting a packet (160a, 160b, 160c) in a network, the method comprising the steps of:
providing a port configured to receive (S6A-1) and transfer (S6A-4) a said packet (160a, 160b, 160c) at a first network entity (PE1, PE2, PE3);
determining a virtual private LAN segment (VPLS 1, VPLS2) and a virtual channel (LSP1-2, LSP1-3, LSP2-3) information assigned to said port at said first network entity (PE1, PE2, PE3);
transmitting said virtual channel (LSP1-2, LSP1-3, LSP2-3) information to a second network entity (PE1, PE2, PE3);
adding (S6A-5) stacking labels to a header of said packet (160a, 160b, 160c) at said first network entity (PE1, PE2, PE3);
**characterized by** the steps of :
providing a port interface connected to said port of said first network entity (PE1, PE2, PE3) for mapping (S6A-3) a routing path for said packet (160a, 160b, 160c) by selecting the routing path from a forwarding information base; and
learning (S6A-5) said routing path to transport said packet (160a, 160b, 160c) from said first network entity (PE1, PE2, PE3) to said second network entity (PE1, PE2, PE3) by associating within the forwarding information base a source MAC address of the packet (160a, 160b, 160c) with the port on which it arrives.

11. The method as recited in claim 10, further comprising the step of determining at least one subscriber identification assigned to said virtual private LAN segment (VPLS 1, VPLS2).

12. The method as recited in claim 11, further comprising the step of mapping traffic transmitted from at least one subscriber to provide multipoint service to said subscriber.

13. The method as recited in claim 12, further comprising the step of forming transport tunnels (110; 115a, 115b, 115c) from said first network entity (PE1, PE2, PE3) to said second network entity (PE1, PE2, PE3) to transport said traffic and to provide said multipoint service to said subscriber.

14. The method as recited in claim 13, further comprising the step of performing a lookup operation to determine the destination address of said packet (160a, 160b, 160c).

15. The network device (100) as recited in claim 3, further comprising:
a first virtual private LAN segment (VPLS1, VPLS2) and a second virtual private LAN segment (VPLS1, VPLS2) connected to said provider edge (PE1, PE2, PE3), wherein said first virtual private LAN segment (VPLS1, VPLS2) and said second virtual private LAN segment (VPLS 1, VPLS2) is configured to overlap.

16. The network device (100) as recited in claim 15, wherein said first virtual private LAN segment (VPLS1, VPLS2) comprises a first VLAN identification associated with a first ingress port of said provider edge (PE1, PE2, PE3) and said second virtual private LAN segment (VPLS1, VPLS2) comprises a second VLAN identification associated with a second ingress port of said provider edge (PE1, PE2, PE3); and
wherein said first VLAN identification differs from said second VLAN identification.

## Patentansprüche

1. Netzwerkvorrichtung (100) zum Bereitstellen von Mehrpunktdiensten,
wobei die Netzwerkvorrichtung (100) Folgendes umfasst:
einen Port, der so konfiguriert ist, dass er ein Paket (160a, 160b, 160c) sendet und empfängt, wobei der Port mit einem ersten Netzelement verbunden ist;
ein Mapping-Modul (200a; 200b), das mit dem ersten Netzelement verbunden ist und so konfiguriert ist, dass es ein Virtual Private LAN Segment (VPLS1, VPLS2) bestimmt, das diesem Port zugeordnet ist;
ein Signalisierungs-Modul, das mit dem Mapping-Modul verbunden ist und so konfiguriert ist, dass es eine Virtual Channel (LSP1-2, LSP1-3, LSP2-3) Information bestimmt, die diesem Port zugeordnet ist, wobei das Signalisierungs-Modul so konfiguriert ist, dass es diese Virtual Channel (LSP1-2, LSP1-3, LSP2-3) Information mit einem zweiten Netzelement austauscht;
ein Einkapselungs-Modul, das mit dem Signalisierungs-Modul verbunden ist und so konfiguriert ist, dass es einem Header des Pakets (160a, 160b, 160c) Stacking Labels hinzufügt, wobei das Einkapselungs-Modul so konfiguriert ist, dass es eine Dienstgüte zuordnet, die bei dem Paket (160a, 160b, 160c) angewendet werden soll,
**gekennzeichnet durch**
eine Portschnittstelle, die mit dem ersten Netzelement verbunden ist und so konfiguriert ist, dass sie einen Routing-Pfad für das Paket (160a, 160b, 160c) mappt, indem sie den Routing-Pfad aus einer Weiterleitungsinformationsbasis auswählt; und
ein Adressenlern-Modul, das mit dem ersten Netzelement und dem zweiten Netzelement verbunden ist, wobei das Adressenlern-Modul so konfiguriert ist, dass es den Routing-Pfad lernt, um das Paket (160a, 160b, 160c) von dem ersten Netzelement zu dem zweiten Netzelement zu transportieren, indem es in der Weiterleitungsinformationsbasis eine Quell-MAC-Adresse des Pakets (160a, 160b, 160c) mit dem Port assoziiert, an dem dieses ankommt.

2. Netzwerkvorrichtung (100) nach Anspruch 1, wobei das Mapping-Modul so konfiguriert ist, dass es wenigstens einen Teilnehmer bestimmt, der dem Virtual Private LAN Segment (VPLS1, VPLS2) zugeordnet ist.

3. Netzwerkvorrichtung (100) nach Anspruch 2, die des Weiteren wenigstens einen Provider Edge (PE1, PE2, PE3) umfasst, der mit dem ersten Netzelement und dem zweiten Netzelement verbunden ist,
wobei der Provider Edge (PE1, PE2, PE3) als ein Zugangspunkt des Virtual Private LAN Segments (VPLS1, VPLS2) konfiguriert ist, damit der wenigstens eine Teilnehmer den Mehrpunktdienst empfangen kann.

4. Netzwerkvorrichtung (100) nach Anspruch 3, wobei der Provider Edge (PE1, PE2, PE3) so konfiguriert ist, dass er den Verkehr des wenigstens einen Teilnehmers mappt, um dem Teilnehmer den Mehrpunktdienst bereitzustellen.

5. Netzwerkvorrichtung (100) nach Anspruch 4, die des Weiteren Folgendes umfasst:
wenigstens ein Paar von Provider Edges (PE1, PE2, PE3), das mit dem ersten Netzelement und dem zweiten Netzelement verbunden ist,
wobei das wenigstens eine Paar von Provider Edges (PE1, PE2, PE3) einen Transporttunnel (110, 115a, 115b, 115c) zum Transportieren des Verkehrs bildet, um den Mehrpunktdienst dem wenigstens einen Teilnehmer bereitzustellen.

6. Netzwerkvorrichtung (100) nach Anspruch 5, wobei die Portschnittstelle eine SPI-4-Schnittstelle umfasst, die so konfiguriert ist, dass sie Nachschlageoperationen in wenigstens einer Nachschlagetabelle durchführen kann.

7. Netzwerkvorrichtung (100) nach Anspruch 6, wobei die wenigstens eine Tabelle Gruppenidentifikationsdaten und Label Switched Path Daten umfasst.

8. Netzwerkvorrichtung (100) nach Anspruch 7, wobei die Gruppenidentifikation der Nachschlagetabelle so konfiguriert ist, dass sie zu einem ersten Virtual LAN mappt, das mit dem Port assoziiert ist; und wobei sich das erste Virtual LAN von einem zweiten Virtual LAN unterscheidet, das mit einem anderen Port assoziiert ist, der mit der Netzwerkvorrichtung (100) verbunden ist.

9. Netzwerkvorrichtung (100) nach Anspruch 8, die des Weiteren wenigstens eine Gruppe von Ports umfasst, wobei diese wenigstens eine Gruppe von Ports so konfiguriert ist, dass sie als ein unabhängiger Layer Switch arbeitet.

10. Verfahren zum Übertragen eines Pakets (160a, 160b, 160c) in einem Netzwerk, wobei das Verfahren die folgenden Schritte umfasst:
Bereitstellen eines Ports, der so konfiguriert ist, dass er das Paket (160a, 160b, 160c) an einem ersten Netzelement (PE1, PE2, PE3) empfängt (S6A-1) und sendet (S6A-4);
Bestimmen eines Virtual Private LAN Segments (VPLS1, VPLS2) und einer Virtual Channel (LSP1-2, LSP1-3, LSP2-3) Information, die dem Port zugeordnet sind, an dem ersten Netzelement (PE1, PE2, PE3); Übertragen dieser Virtual Channel (LSP1-2, LSP1-3, LSP2-3) Information an ein zweites Netzelement (PE1, PE2, PE3);
Hinzufügen (S6A-5) von Stacking Labels zu einem Header des Pakets (160a, 160b, 160c) an dem ersten Netzelement (PE1, PE2, PE3); **gekennzeichnet durch** die folgenden Schritte:
Bereitstellen einer Portschnittstelle, die mit dem Port des ersten Netzelements (PE1, PE2, PE3) verbunden ist, um einen Routing-Pfad für das Paket (160a, 160b, 160c) zu mappen, indem der Routing-Pfad aus einer Weiterleitungsinformationsbasis ausgewählt wird; und
Lernen (S6A-5) des Routing-Pfads, um das Paket (160a, 160b, 160c) von dem ersten Netzelement (PE1, PE2, PE3) zu dem zweiten Netzelement (PE1, PE2, PE3) zu transportieren, indem in der Weiterleitungsinformationsbasis eine Quell-MAC-Adresse des Pakets (160a, 160b, 160c) mit dem Port assoziiert wird, an dem dieses ankommt.

11. Verfahren nach Anspruch 10, des Weiteren mit dem Schritt des Bestimmens wenigstens einer Teilnehmeridentifikation, die dem Virtual Private LAN Segment (VPLS1, VPLS2) zugeordnet ist.

12. Verfahren nach Anspruch 11, des Weiteren mit dem Schritt des Mappings des Verkehrs, der von wenigstens einem Teilnehmer übertragen wird, um dem Teilnehmer einen Mehrpunktdienst bereitzustellen.

13. Verfahren nach Anspruch 12, des Weiteren mit dem Schritt des Bildens von Transporttunneln (110; 115a, 115b, 115c) von dem ersten Netzelement (PE1, PE2, PE3) zu dem zweiten Netzelement (PE1, PE2, PE3), um den Verkehr zu transportieren und um den Mehrpunktdienst dem Teilnehmer bereitzustellen.

14. Verfahren nach Anspruch 13, des Weiteren mit dem Schritt des Durchführens einer Nachschlageoperation, um die Zieladresse des Pakets (160a, 160b, 160c) zu bestimmen.

15. Netzwerkvorrichtung (100) nach Anspruch 3, die des Weiteren Folgendes umfasst:
ein erstes Virtual Private LAN Segment (VPLS1, VPLS2) und ein zweites Virtual Private LAN Segment (VPLS1, VPLS2), die mit dem Provider Edge (PE1, PE2, PE3) verbunden sind, wobei das erste Virtual Private LAN Segment (VPLS1, VPLS2) und das zweite Virtual Private LAN Segment (VPLS1, VPLS2) so konfiguriert sind, dass sie sich überlappen.

16. Netzwerkvorrichtung (100) nach Anspruch 15, wobei das erste Virtual Private LAN Segment (VPLS1, VPLS2) eine erste VLAN Identifikation umfasst, die mit einem ersten Eintrittsport des Provider Edge (PE1, PE2, PE3) assoziiert ist, und das zweite Virtual Private LAN Segment (VPLS1, VPLS2) eine zweite VLAN Identifikation umfasst, die mit einem zweiten Eintrittsport des Provider Edge (PE1, PE2, PE3) assoziiert ist; und
wobei sich die erste VLAN Identifikation von der zweiten VLAN Identifikation unterscheidet.

## Revendications

1. Dispositif de réseau (100) servant à fournir des services multipoints, le dispositif de réseau (100) comprenant :
un port configuré pour envoyer et recevoir un paquet (160a, 160b, 160c), dans lequel le port est connecté à une première entité de réseau ;
un module de mappage (200a ; 200b) connecté à ladite première entité de réseau et configuré pour déterminer un segment de réseau local privé virtuel (VPLS1, VPLS2) assigné audit port ;
un module de signalisation connecté audit module de mappage et configuré pour déterminer une information de canal virtuel (LSP1-2, LSP1-3, LSP2-3) assigné audit port, dans lequel ledit module de signalisation est configuré pour échanger ladite information de canal virtuel (LSP1-2, LSP1-3, LSP2-3) avec une seconde entité de réseau ;
un module d'encapsulation connecté audit module de signalisation et configuré pour ajouter des étiquettes hiérarchisées à un en-tête dudit paquet (160a, 160b, 160c), dans lequel ledit module d'encapsulation est configuré pour assigner une qualité de service devant être appliquée audit paquet (160a, 160b, 160c),
**caractérisé par**
une interface de port connectée à ladite première entité de réseau et configurée pour mapper un chemin de routage pour ledit paquet (160a, 160b, 160c) en sélectionnant le chemin de routage à partir d'une base d'information de retransmission ; et
un module d'apprentissage d'adresse connecté à ladite première entité de réseau et à ladite seconde entité de réseau, dans lequel ledit module d'apprentissage d'adresse est configuré pour apprendre audit chemin de routage à transporter ledit paquet (160a, 160b, 160c) à partir de ladite première entité de réseau vers ladite seconde entité de réseau en associant à l'intérieur de la base d'information de retransmission une adresse MAC source du paquet (160a, 160b, 160c) au port sur lequel il arrive.

2. Dispositif de réseau (100) selon la revendication 1, dans lequel le module de mappage est configuré pour déterminer au moins un abonné assigné audit segment de réseau local privé virtuel (VPLS1, VPLS2).

3. Dispositif de réseau (100) selon la revendication 2, comprenant en outre au moins une périphérie de fournisseur (PE1, PE2, PE3) connectée à ladite première entité de réseau et à ladite seconde entité de réseau, dans lequel ladite périphérie de fournisseur (PE1, PE2, PE3) est configurée comme un point d'accès dudit segment de réseau local privé virtuel (VPLS1, VPLS2) pour ledit au moins un abonné afin de recevoir ledit service multipoint.

4. Dispositif de réseau (100) selon la revendication 3, dans lequel ladite périphérie de fournisseur (PE1, PE2, PE3) est configurée pour mapper le trafic dudit au moins un abonné afin de fournir audit abonné ledit service multipoint.

5. Dispositif de réseau (100) selon la revendication 4, comprenant en outre :
au moins une paire de périphéries de fournisseur (PE1, PE2, PE3) connectée à ladite première entité de réseau et à ladite seconde entité de réseau, dans lequel ladite au moins une paire de périphéries de fournisseur (PE1, PE2, PE3) forme un tunnel de transport (110, 115a, 115b, 115c) servant à transporter ledit trafic pour fournir ledit service multipoint audit au moins un abonné.

6. Dispositif de réseau (100) selon la revendication 5, dans lequel ladite interface de port comprend une interface SPI-4 configurée pour exécuter des opérations de conversion à l'intérieur d'au moins une table de conversion.

7. Dispositif de réseau (100) selon la revendication 6, dans lequel ladite au moins une table comprend des données de groupe d'identification et des données commutées de chemin d'étiquettes.

8. Dispositif de réseau (100) selon la revendication 7, dans lequel ledit groupe d'identification de ladite table de conversion est configuré pour mapper vers un premier réseau local virtuel associé audit port ;
et dans lequel ledit premier réseau local virtuel diffère d'un second réseau local virtuel associé à un autre port connecté audit dispositif de réseau (100).

9. Dispositif de réseau (100) selon la revendication 8, comprenant en outre au moins un groupe de ports, dans lequel ledit au moins un groupe de ports est configuré pour fonctionner comme un commutateur de couche indépendant.

10. Procédé de transmission d'un paquet (160a, 160b, 160c) dans un réseau, le procédé comprenant les étapes consistant à :
fournir un port configuré pour recevoir (S6A-1) et transférer (S6A-4) un dit paquet (160a, 160b, 160c) à une première entité de réseau (PE1, PE2, PE3) ;
déterminer une information de segment de réseau local privé virtuel (VPLS1, VPLS2) et de canal virtuel (LSP1-2, LSP1-3, LSP2-3) assignée audit port au niveau de ladite première entité de réseau (PE1, PE2, PE3) ;
transmettre ladite information de canal virtuel (LSP1-2, LSP1-3, LSP2-3) vers une seconde entité de réseau (PE1, PE2, PE3) ;
ajouter (S6A-5) des étiquettes hiérarchisées à un en-tête dudit paquet (160a, 160b, 160c) au niveau de ladite première entité de réseau (PE1, PE2, PE3) ;
**caractérisé par** les étapes consistant à :
fournir une interface de port connectée audit port de ladite première entité de réseau (PE1, PE2, PE3) servant à mapper (S6A-3) un chemin de routage pour ledit paquet (160a, 160b, 160c) en sélectionnant le chemin de routage à partir d'une base d'information de retransmission ; et
apprendre (S6A-5) audit chemin de routage à transporter ledit paquet (160a, 160b, 160c) à partir de ladite première entité de réseau (PE1, PE2, PE3) vers ladite seconde entité de réseau (PE1, PE2, PE3) en associant à l'intérieur de la base d'information de retransmission une adresse MAC source du paquet (160a, 160b, 160c) au port sur lequel il arrive.

11. Procédé selon la revendication 10, comprenant en outre l'étape consistant à déterminer au moins une identification d'abonné assignée audit segment de réseau local privé virtuel (VPLS1, VPLS2).

12. Procédé selon la revendication 11, comprenant en outre l'étape consistant à mapper le trafic transmis à partir d'au moins un abonné afin de fournir un service multipoint audit abonné.

13. Procédé selon la revendication 12, comprenant en outre l'étape consistant à former des tunnels de transport (110, 115a, 115b, 115c) à partir de ladite première entité de réseau (PE1, PE2, PE3) vers ladite seconde entité de réseau (PE1, PE2, PE3) pour transporter ledit trafic et pour fournir ledit service multipoint audit abonné.

14. Procédé selon la revendication 13, comprenant en outre l'étape consistant à exécuter une opération de conversion pour déterminer l'adresse de destination dudit paquet (160a, 160b, 160c).

15. Dispositif de réseau (100) selon la revendication 3, comprenant en outre :
un premier segment de réseau local privé virtuel (VPLS1, VPLS2) et un second segment de réseau local privé virtuel (VPLS1, VPLS2) connectés à ladite périphérie de fournisseur (PE1, PE2, PE3), dans lequel ledit premier segment de réseau local privé virtuel (VPLS1, VPLS2) et ledit second segment de réseau local privé virtuel (VPLS1, VPLS2) sont configurés pour se chevaucher.

16. Dispositif de réseau (100) selon la revendication 15, dans lequel ledit premier segment de réseau local privé virtuel (VPLS1, VPLS2) comprend une première identification VLAN associée
à un premier port d'entrée de ladite périphérie de fournisseur (PE1, PE2, PE3) et ledit second segment de réseau local privé virtuel (VPLS1, VPLS2) comprend une seconde identification VLAN associée à un second port d'entrée de ladite périphérie de fournisseur (PE1, PE2, PE3); et
dans lequel ladite première identification VLAN diffère de ladite seconde identification VLAN.
